# EUROPEAN PATENT APPLICATION

(11) **EP 1 149 532 A1**
(43) Date of publication of application: **31.10.2001**
(21) Application number: 01109715.1
(22) Date of filing: 20.04.2001
(51) Int. Cl.: A01N 51/00, A01N 61/00, A01N 43/40, A01N 47/40, A01N 43/50, A01N 25/00

(54) **Method for controlling flies**

(30) Priority: 26.04.2000 JP 2000131562
(71) Applicant: Takeda Chemical Industries, Ltd., Osaka-shi, Osaka 541 (JP)
(72) Inventor: Miura, Hiroyuki, Nishitokyo-shi, Tokyo (JP); Akayama, Atsuo, Tsukuba-shi, Ibaraki (JP)
(74) Representative: von Kreisler, Alek, Dipl.-Chem.

(57) **Abstract**

There is provided a method for controlling flies, that live in or come flying to livestock pens or poultry houses, by using a compound or salt thereof with an affinity for a nicotinic acetylcholine receptor of insects. Since having a very high activity against flies, the compound or salt thereof helps quickly and efficiently to control flies that live in or come flying to livestock pens or poultry houses.

## Description

### FIELD OF THE INVENTION

The present invention relates to a method for controlling flies, that live in or come flying to livestock pens (including barns, etc.,) or poultry houses such as chicken houses, by using one or more compounds or salts thereof having an affinity for a nicotinic acetylcholine receptor (hereinafter, sometimes abbreviated to as "NACR") of insects. The present invention also relates to a composition for controlling flies that live in or come flying to livestock pens or poultry houses comprising the compounds or salts thereof.

The compounds having an affinity for NACR used herein include insecticidal compounds with an agonist activity or antagonist activity for NACR (hereinafter, sometimes abbreviated to as "NACRA type insecticidal compounds").

### DISCLOSURE OF THE PRIOR ART

Examples of conventional agents for controlling flies in livestock pens or poultry houses include organo-phosphoric pesticides, synthetic pyrethroids, IGR (chitin-biosynthesis inhibitor), JHM (materials for juvenile hormone) and the like. However, repeated use of these limited chemicals results in various problems including the occurrence of flies having resistance to the chemicals and delayed effect of, in particular, IGR and JHM on the flies. Thus, this is not a satisfactory situation. Also, synthetic pyrethroids are known to have a repellent activity. Therefor, even though flies are apparently reduced after chemical treatment, in fact they move to the surroundings of livestock pens or poultry houses. In some cases, it may make a community uncomfortable.

On the other hand, examples of the NACRA type insecticidal compounds include compounds described in EP-A 135956, EP-A 136636, EP-A 154178, EP-A 163855, EP-A 189972, EP-A 192060, EP-A 212600, EP-A 235725, EP-A 254859, EP-A 259738, EP-A 302389, EP-A 302833, EP-A 303570, EP-A 306696, EP-A 315826, EP-A 364844, EP-A 375907, EP-A 383091, EP-A 386565, EP-A 425978, EP-A 428941, EP-A 455000, EP-A 464830, EP-A 471372, EP-A 580553; DE-A 3639877, DE-A 3712307; JP-A 63-287764, JP-A 63-307857, JP-A 2-171, JP-A 2-207083, JP-A 3-128361, JP-A 3-157308, JP-A 3-169861, JP-A 3-218370, JP-A 3-220176, JP-A 3-246283, JP-A 3-255072, JP-A 3-279359, JP-A 4-9371, JP-A 4-154741, JP-A 5-271207, JP-A 6-183918, JP-A 7-179448, JP-A 7-278094; U.S Pat. No. 4918086, U.S Pat. No. 4948798, U.S Pat. No. 5034404, U.S Pat. No. 5034524, U.S Pat. No. 5039686; WO 91/4965, WO 91/17659; FR-A 2611114; Brazil Patent Application No. 8803621 and the like. These NACRA type insecticidal compounds are sometimes referred to as neonicotinoid compounds, nitromethylene compounds, chloronicotinyl compounds and thianicotinyl compounds. Some of these compounds are marketed or under development.

Some of these patent publications disclose that the compounds have the effect on agricultural insect pests and insanitary insects (e.g., JP-A 3-157308). However, none of them refer to control of flies in livestock pens or poultry houses.

Moreover, a method for directly treating host animals with these NACRA type compounds for extermination of fleas in mainly dogs and cats are described in, for example, JP-A 8-92091 and JP-A 2000-63271. However, no description is given with respect to control of flies that live in or come flying to livestock pens or poultry houses.

Examples of the flies in livestock pens or poultry houses include flies such as *Hypoderma bovis* whose larva parasitizing the skin, or stinging and biting *Stomoxys* that directly inflict pain on livestock, and flies such as *Musca domestica*, *Muscina stabulaus* and *Fannia canicularis* that produce indirect detrimental effects on livestock. Such indirect detrimental effects include malodor caused by evolution of ammonia resulting from softening of feces by the larva and propagation of various diseases by the imagoes to livestock, poultry or humans. Examples of the diseases propagated by adult flies include Newcastle disease and influenza in chickens, infectious gastroenteritis and cholera in pigs, mastitis and epizootic stomatitis in cows, dysentery, cholera and alimentary intoxication (e.g., alimentary intoxication caused by *Salmonella,* pathogenic *Escherichia coli* 0-157 and the like) in humans. Also, flies are considered to be filthy insect pests. Therefor, when flies come flying to houses surrounding livestock pens or poultry houses, troubles with a community may occur as a problem. Thus, it is essential for livestock farmers to achieve control of these flies.

### OBJECTS OF THE INVENTION

However, according to the present situation involving the above-described problem of the development of resistance, it is desired that a new type of agents having high activities for controlling flies are developed.

The main object of the present invention is to provide a method for controlling flies, that live in or come flying to livestock pens or poultry houses.

This objective as well as other objectives and advantages of the present invention will become apparent to those skilled in the art from the following description.

### SUMMARY OF THE INVENTION

Under the above circumstances, the present inventors have studied intensively for searching a new type of an agent for controlling flies that live in or come flying to livestock pens or poultry houses. As a result, surprisingly, the present inventors have found that an NACRA type insecticidal compound has very high activity against these flies. As a result of the present inventors' further study, the present invention has been completed.

That is, according to the present invention, there is provided:
(1) A method for controlling flies, that live in or come flying to livestock pens or poultry houses, comprising using a compound or salt thereof having an affinity for a nicotinic acetylcholine receptor of insects;
(2) The method for controlling flies according to the above (1), wherein the compound or the salt thereof is a compound of the formula I, II or III: 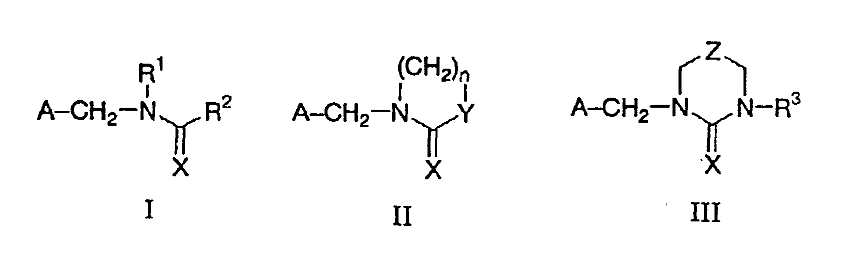 wherein A represents 6-chloro-3-pyridyl, 2-chloro-5-thiazolyl, tetrahydrofuran-3-yl, 5-methyltetrahydrofuran-3-yl, 3-pyridyl, 6-bromo-3-pyridyl, 3-cyanophenyl, 2-methyl-5-thiazolyl, 2-phenyl-5-thiazolyl or 2-bromo-5-thiazolyl; R¹ represents hydrogen atom, methyl, ethyl, propyl, propenyl, propynyl, formyl, acetyl or methoxycarbonyl; R² represents methyl, ethyl, amino, methylamino, N,N-dimethylamino, ethylamino, N,N-diethylamino, N-methyl-N-ethylamino, 1-pyrrolidinyl, N-methylformamide, N-methylacetamide or N-methyl-N-(methoxycarbonyl)amino; R³ represents a hydrogen atom, methyl, ethyl, propyl, propenyl, propynyl, formyl, acetyl or methoxycarbonyl; X represents nitromethylene, nitroimino, cyanoimino or trifluoroacetylimino; Y represents a group represented by N (R⁴) (R⁴ is as defined with respect to R¹) or sulfur atom; Z represents a group represented by N (R⁵) (R⁵ is as defined with respect to R¹) or oxygen atom; and n is an integer of 2 or 3, or a salt thereof;
(3) The method for controlling flies according to the above (1), wherein the compound is one or more compounds selected from the group consisting of clothianidin (common name), nitenpyram (common name), imidacloprid (common name), thiacloprid (common name), acetamiprid (common name), thiamethoxam (common name) and dinotefuran (common name);
(4) The method for controlling flies according to the above (1), wherein the compound is chlothianidine (trade name);
(5) The method for controlling flies according to the above (1), wherein the compound or salt thereof having an affinity for a nicotinic acetylcholine receptor of insects is sprinkled or sprayed in livestock pens or poultry houses;
(6) The method for controlling flies according to the above (1), wherein the compound or salt thereof with an affinity for a nicotinic acetylcholine receptor of insects is applied to the inside of livestock pens or poultry houses;
(7) The method for controlling flies according to the above (1), wherein a poisoned bait containing the compound or salt thereof with an affinity for a nicotinic acetylcholine receptor of insects is placed in livestock pens or poultry houses;
(8) A composition for controlling flies, that live in or come flying to livestock pens or poultry houses, comprising a compound or salt thereof having an affinity for a nicotinic acetylcholine receptor of insects;
(9) The composition for controlling flies according to the above (8), wherein the compound or the salt thereof is a compound of the formula I, II or III shown in the above (2) or a salt thereof;
(10) Use of a compound or salt thereof having an affinity for a nicotinic acetylcholine receptor of insects for manufacturing a composition for controlling flies that live in or come flying to livestock pens or poultry houses; and
(11) Use according to the above (10), wherein the compound or the salt thereof is a compound of the formula I, II or III as shown in the above (2) or a salt thereof.

### DETAILED DESCRIPTION OF THE INVENTION

Examples of the compounds having an affinity for NACR include the compounds described in the above patent publications. They can be produced according to the methods described in the above patent publications, or their modifications.

Among NACRA type insecticidal compounds, preferably, an insecticidal compound having an agonist activity for NACR are used.

It is preferred to use a compound of the formula I, II or III: 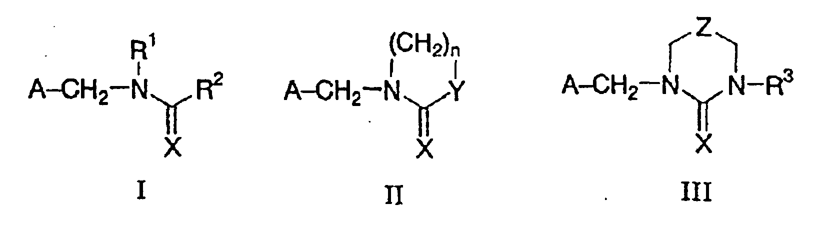 wherein the symbols are as defined above, or a salt thereof.

It is more preferred to use clothianidin [(E)-1-(2-chloro-1,3-thiazol-5-ylmethyl)-3-methyl-2-nitroguanidine], nitenpyram [(E)-N-(6-chloro-3-pyridylmethyl)-N-ethyl-N'-methyl-2-nitrovinylidenediamine], imidacloprid [1-(6-chloro-3-pyridylmethyl)-2-nitroiminoimidazolidine], thiacloprid [3-(6-chloro-3-pyridylmethyl)-2-cyanoimino-1,3-thiazolidin], acetamiprid [ (E) -N¹-(6-chloro-3-pyridylmethyl) -N²-cyano-N¹-methylacetoamidine], thiamethoxam [3-(2-chloro-1,3-thiazol-5-ylmethyl)-5-methyl-4-nitroimino-1,3,5-perhydroxadiazine], and dinotefuran [1-methyl-2-nitro-3-(3-tetrahydrofurylmethyl)guanidine]. The structural formulae thereof are as follows:

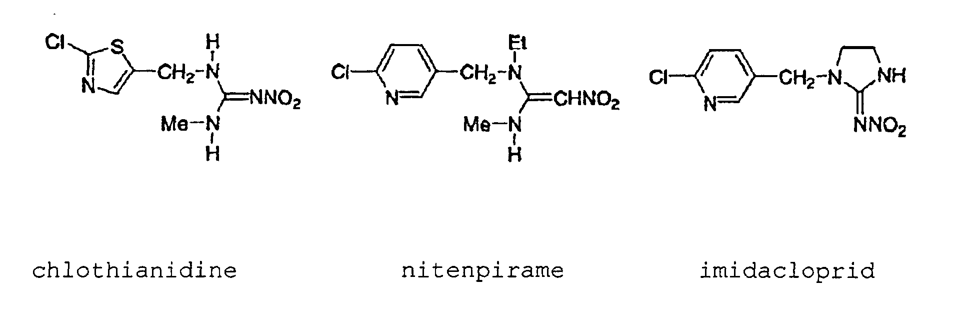

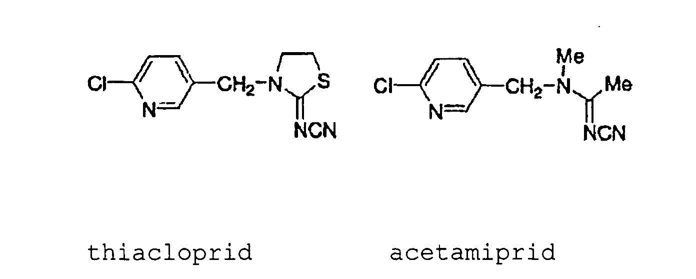

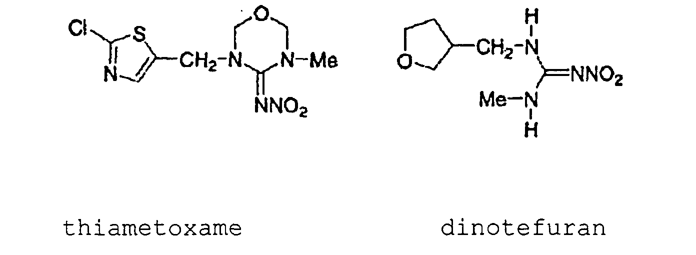

Among the above, chlothianidine (trade name) is the most preferred.

These compounds having an affinity for NACR sometimes react with acidic substances or basis substances, to form salts. These salts may be agricultural chemicals acceptable salts. More specifically, examples of the basic substances include alkali metals such as sodium, potassium, lithium, etc.; alkaline earth metals such as calcium, magnesium, etc.; inorganic bases such as ammonia, etc.; and organic bases such as pyridine, collidine, triethylamine, triethanolamine, etc.; and the like. Examples of the acidic substances include inorganic acid such as hydrochloric acid, hydrobromic acid, hydroiodic acid, phosphoric acid, sulfuric acid, perchloric acid,etc.; and organic acid salts such as formic acid, acetic acid, tartaric acid, malic acid, citric acid, oxalic acid, succinic acid, benzoic acid, picric acid, methanesulfonic acid, p-toluenesulphonic acid, etc.

These compounds or salts thereof having an affinity for NACR have low toxicity against mammals including livestock and humans and low fish toxicity, and thus are excellent eco-friendly fly-controlling agents.

Flies targeted for control by the present invention in livestock pens or poultry houses refer to all flies that live in or come flying to livestock pens or poultry houses. Examples of the flies include those of *Museidae* such as *Musca domestica*, *Fannia canicularis, Muscina stabulans*, *Stomoxys calcitrans,* etc.; *Calliphoridae* such as *Calliphora lata*, *Callophora vicina, Aldrichina grahami*, *Lucilia illustris,* etc.; and *Sarcophagidae* such as *Boektcherisca peregrina*, etc. The most troublesome flies in the livestock farming are flies of *Museidae* mentioned above.

These flies targeted for control include every stage of generation, i.e., eggs, larvae, pupas and imagoes. Particularly, the compound or a salt thereof used in the present invention exhibits a high activity against larvae and imagoes. That is, the preferred embodiment of the present invention include a method for controlling larvae and imagoes of flies that live in livestock pens or poultry houses, or imagoes of flies that come flying thereto.

The compounds or salts thereof having an affinity for NACR described above exhibits a strong insecticidal activity against *Diptera* in general, enabling simultaneous control of mosquitoes and gnats of *Nematocera,* and horseflies of *Brachycera.*

Typical examples of livestock pens or poultry houses to which the compounds or salts thereof having an affinity for NACR described above are used, include a cow house, a pig pen and a poultry farm. Examples thereof also include places for bleeding other livestock and pets (e.g., horses, sheep, goats, camels, buffalo, donkeys, rabbits, deer, reindeer, minks, dogs and cats) and poultry (e.g., ducks, turkeys and quails). Further, "the livestock pens or poultry houses" of the present invention includes sites for accumulating feces and urine, garbage, spilt feed and the like discharged from these facilities, which may be located indoor or outdoor around livestock pens or poultry houses.

For using the compounds or salts thereof having an affinity for NACR described above for controlling flies in livestock pens or poultry houses, they can be formulated in the form of conventional agrochemical formulations. That is, one or more (preferably, one or more but three or less) of the compounds or salts thereof having an affinity for NACR as active components are dissolved or dispersed in an appropriate liquid carrier, or mixed or absorbed with an appropriate solid carrier to prepare emulsion, solution, microemulsion, flowable preparation, oily preparation, water soluble powder, wettable powder, granular wettable powder, powder, granule, microgranule, smoking agent, tablet, microcapsule, spray, EW, ointment, poisoned bait, and the like.

If necessary, to these preparations may be added emulsifier, suspension, spreader, penetrant, humecant, mucilage, stabilizer and the like. They are prepared by a per se known method.

Examples of the liquid carrier (solvent) to be used include water, alcohols (e.g., methyl alcohol, ethyl alcohol, n-propyl alcohol, isopropyl alcohol, ethylene glycol, etc.), ketones (e.g., acetone, methyl ethyl ketone, etc.), ethers (e.g., dioxane, tetrahydrofuran, ethylene glycol monomethyl ether, diethylene glycol monomethyl ether, propylene glycol monomethyl ether, etc.), aliphatic hydrocarbons (e.g., kerosene, lamp oil, fuel oil, machine oil, etc.), aromatic hydrocarbons (e.g., benzene, toluene, xylene, solvent naphtha, methylnaphthalene, etc.), halogenated hydrocarbons (e.g., dichloromethane, chloroform, carbon tetrachloride, etc.), acid amides (e.g., N,N-dimethylformamide, N,N-dimethylacetamide, etc.), esters (e.g., ethyl acetate, butyl acetate, glycerol fatty acid ester, etc.), nitriles (e.g., acetonitrile, propionitrile, etc.) and the like. One or more of these carriers (preferably, one or more, but three or less) may be mixed at a suitable ratio according to particular used.

Examples of the solid carriers (diluent, extender) include vegetable powder (e.g., soy flour, tobacco powder, wheat flour, wood flour, etc.), mineral powder (e.g., clay such as kaolin, bentonite, acid clay, etc.; talc such as talc powder, pyrophyllite powder, etc.; silica such as diatom earth, mica powder, etc.; and the like), alumina, sulfur powder, activated carbon and the like. One or more of these carrier (preferably, one or more, but three of less) may be mixed at a suitable ratio according to particular use.

Examples of ointment bases include polyethylene glycol; pectin; polyol ester of higher fatty acid such as glyceryl monostearate ester, etc.; cellulose derivative such as methyl cellulose, etc.; sodium alginate; bentonite; higher alcohol; polyol such as glycerin, etc.; vaseline; white vaseline; liquid paraffin; lard; various vegetable oils; lanolin; anhydrous lanolin; hardened oil; resin and the like. These may be used alone or in combination thereof (preferably, one or more, but three or less). If necessary, various surfactants can be appropriately added.

Examples of the surfactants to be used as emulsifier, spreader, penetrant, dispersant or the like include nonionic and anionic surfactants such as soaps, polyoxyethylene alkylaryl ethers [e.g., Noigen (trade name) and E·A 142 (trade name) manufactured by Daiichi Kogyo Seiyaku Co., Ltd.; Nonal (trade name) manufactured by Toho Chemical], alkylsulfates [e.g., Emal 10 (trade name) and Emal 40 (trade name) manufactured by Kao Corporation], alkylsulfonates [e.g., Neogen (trade name) and Neogen T (trade name) manufactured by Daiichi Kogyo Seiyaku Co., Ltd.; Neopellex (trade name) manufcatured by Kao Corporation], polyethylene glycol ethers [e.g., Nonipol 85 (trade name), Nonipol 100 (trade name) and Nonipol 160 (trade name) manufactured by Sanyo Chemical Industries, Ltd.], polyhydric alcohol esters [e.g., Tween 20 (trade name) and Tween 80 (trade name) manufactured by Kao Corporation] and the like. They may be used whenever they are needed. Further, the compounds or salts thereof having an affinity for NACR may be used in combination with one or more other insecticides (e.g., pyrethroid insecticides, organophosphorus insecticides, carbamate insecticides, phenylpyrazole insecticides, phenylpyrrole insecticides, benzoylurea insecticides, dibenzoylhydrazine insecticides, Nereistoxin insecticides, juvenile hormone substances, natural insecticides, and the like), miticides (acaricides), nematocides, fungicides (e.g., copper fungicides, organochlorine fungicides, organosulfur fungicides, phenolic fungicides, benzimidazole fungicides, EBI, melanin-biosynthesis inhibitors and acrylate fungicides), synergists, attractants (e.g., sugar, vinegar, molasses, milk powder, etc.), repellents, pigments, and the like according to particular use.

Normally, the compounds or salts thereof having an affinity for NACR are formulated in an amount of about 0.01 to 95% by weight, preferably about 0.1 to 80% by weight based on the total weight of the composition for controlling flies of the present invention. More specifically, when the composition to be used is in the form of emulsion, solution, wettable powder, granular wettable powder or the like, suitably, the compounds or salts can be formulated in an amount of about 1 to 80% by weight, preferably about 1 to 20% by weight based on the total weight of the composition. When the composition to be used is in the form of oily solution, powder or the like, suitably, the compounds or salts can be formulated in an amount of about 0.1 to 50% by weight, preferably about 0.1 to 20% by weight based on the total weight of the composition. When the composition to be used in the form of granule or the like, suitable, the compounds or salts can be formulated in an amount about 5 to 50% by weight, preferably about 1 to 20% by weight based on the total weight of the composition.

Normally, other active components to be combined in the composition for controlling flies of the present invention (e.g., insecticides, acaricides (miticides) and/or fungicides) may be used in an amount ranging from about 0.01 to 80% by weight, preferably about 1 to 20% by weight based on the total weight of the composition.

The content of additives other than the above active components varies depending on a particular kind or content of the active component, a particular form of the composition and the like. Normally, they are formulated in an amount of about 0.001 to 99.9% by weight, preferably about 1 to 99% by weight based on the total weight of the composition. More specifically, normally, it is preferred to add about 1 to 20% by weight, preferably about 1 to 15% by weight of a surfactants, about 1 to 20% by weight of a fluidization aid, and about 1 to 90% by weight, preferably about 1 to 70% by weight of a carrier based on the total weight of the composition, respectively. Still more specifically, for producing a solution, normally, it is preferred to about 1 to 20% by weight, preferably about 1 to 10% by weight of a surfactant and about 20 to 90% by weight of water based on the total weight of the composition. Upon use, the emulsion, wettable powder (e.g., granular wettable powder) or the like may be diluted with water and the like to a suitable concentration (e.g., about 100 to 5,000-fold) before sprinkling or spraying.

Representative examples of insecticides, miticides (acaricides) and fungicides, which may be used by mixing or combining with the compounds or salts thereof having an affinity for NACR in the method for controlling flies of the present invention, are as follows: EPN, acephate, isoxathion, isofenphos, isoprocarb, etrimfos, oxydeprofos, quinalphos, cadusafos, chlorethoxyfos, chlorpyrifos, chlorpyrifos-methyl, chlorofenvinphos, salithion, cyanophos, disulfoton, dimethoate, sulprofos, diazinon, thiometon, tetrachlorvinphos, tebupirimfos, trichlorphon, naled, vamidothion, pyraclophos, pyridafenthion, pirimiphos-methyl, fenitrothion, fenthion, phenthoate, fosthiazate, butathiofos, prothiofos, propaphos, profenofos, phosalone, fosthiazate, malathion, methidathion, metolcarb, monocrotophos, BPMC, XMC, alanycarb, ethiofencarb, carbaryl, carbosulfan, carbofuran, xylylcarb, cloethocarb, thiodicarb, triazamate, pirimicarb, fenoxycarb, fenothiocarb, furathiocarb, propoxur, bendiocarb, benfuracarb, methomyl, acrinathrin, imiprothrin, ethofenprox, cycloprothrin, sigma-cypermethrin, cyhalothrin, cyflutyrin, cypermethrin, silafluofen, tefluthrin, deltamethrin, tralomethrin, fenvalerate, fenpropathrin, flucythrinate, fluvalinate, flufenoprox, fluproxyfen, flumethrin, prallethrin, beta-cyfluthrin, benfluthrin, permethrin, cartap, thiocyclam, bensultap, avermectin, emamectin-benzoate, clofentezine, chlorfluazuron, cyromazine, diafenthiuron, dienochlor, dichlorvos, diflubenzuron, spynosyn, sulfluramid, teflubenzuron, tebufenozide, tebufenpyrad, hydroprene, vaniliprole, pymetrozine, pyridaben, pyriproxyfen, pyrimidifen, fipronil, fenazaquin, fenpyroximate, fluazuron, flucycloxuron, flufenoxuron, buprofezin, hexaflumuron, hexythiazox, milbemycin, metoxadiazone, lufenuron, levamisol, chlorphenapyr, NC-184, etoxazole, IBP, ampropylfos, edifenphos, chlorthiophos, tolclofos-methyl, fosetyl, ipconazole, imazalil, imibenconazole, etaconazole, epoxiconazole, cyproconazole, diniconazole, difenoconazole, tetraconazole, tebuconazole, triadimenol, triadimefon, triticonazole, triforine, bitertanol, viniconazole, fenarimol, fenbuconazole, fluotrimazole, furconazole-cis, flusilazole, flutriafol, bromuconazole, propiconazole, hexaconazole, pefurazoate, penconazole, myclobutanil, metconazole, cabendazin, debacarb, prothiocarb, benomyl, maneb, TPN, isoprothiolane, iprodione, iminoctadine-albesil, iminoctadine-triacetate, ethirimol, etridiazole, oxadixyl, oxycarboxin, oxolinic acid, ofurace, kasugamycin, carboxin, captan, clozylacon, chlobenthiazone, cyprodinil, cyprofuram, diethofencarb, dichlofluanid, diclomezine, zineb, dimethirimol, dimethomorph, dimefluazole, thiabendazole, thiophanate-methyl, thifluzamide, tecloftalam, triazoxide, triclamide, tricyclazole, tridemorph, triflumizole, validamycin A, hymexazol, pyracarbolid, pyrazophos, pyrifenox, pyrimethanil, pyroquilon, ferimzone, fenpiclonil, fenpropidin, fenpropimorph, fthalide, furametpyr, furalaxyl, fluazinam, furcarbanil, fluquinconazole, fludioxonil, flusulfamide, flutolanil, butiobate, prochloraz, procymidone, probenazole, benalaxyl, benodanil, pencycuron, myclozolin, metalaxyl, metsulfovax, methfuroxam, mepanipyrim, mepronil, kresoxim-methyl, azoxystrobin, SSF-126 and carpropamid.

For controlling flies in livestock pens or poultry houses by using the compounds or salts thereof having an affinity for NACR, the above-described composition comprising the compounds or salts thereof having an affinity for NACR can be sprinkled or sprayed over habitats and gathering places of flies in livestock pens or poultry houses by a per se known method, whereby the composition is allowed to come into contact with flies or to be ingested by flies to exterminate them. The composition may be sprinkled or sprayed in the air to exterminate flying adult flies in livestock pens or poultry houses, or sprinkled or sprayed over places where mainly larvae live (e.g., feces, spilt feed, etc.). The preferred composition includes that in the form of water soluble powder, solution, wettable powder, granular wettable powder, powder or emulsion. The amount of the composition to be applied may be varied broadly according to particular application time, application place, application method, or the like. In general, the composition is preferably applied so that the amount of the active component (the compounds or salts thereof having an affinity for NACR) per 1 m² is in the range of about 0.1 mg to 10 g, preferably about 1 mg to 1 g. In the case where the composition is usually diluted by water upon use, the composition may be diluted so that the final concentration of the active component ingredient is in the range of about 0.1 to 10,000 ppm, preferably about 10 to 500 ppm.

Alternatively, it is possible to exterminate flies by applying the above composition to the inside of livestock pens or poultry houses, or by placing the composition as poisoned bait therein. More specifically, for example, the above composition may be applied to or sprinkled or sprayed over a wall, door, pillar, window, floor, ceiling, beam and the like of livestock pens or poultry houses, if this is convenient, in combination with one or two or more attractants (e.g., sugar, vinegar, molasses, milk powder, bran, etc.) (preferably, one or more, but three or less). Also, plates treated with the chemicals (e.g., 10 x 20 cm to 1 x 2 m) may be taken in livestock pens or poultry houses, and placed or suspended. Preferably, the liquid composition has concentration of from 0.001 to 20% by weight of the active component, and attractants are added in an amount of from 1 to 20% by weight. As poisoned bait, there can be used a mixture of attractants including sugar, vinegar, molasses, milk powder and bran (one or two or more, preferably, one or more but three of less), and the above composition containing one or more compounds or salts thereof having an affinity for NACR (preferably, water soluble powder, wettable powder, granular wettable powder and the like) diluted by water. The preferred concentration of the active component and attractants is the same as in the case of the application to the inside of livestock pens or poultry houses. Poisoned bait thus prepared can be used by putting it in, for example, a tray of an appropriate size (e.g. 10 x 10 cm to 1 x 2 m). It may be effective to lay paper or cloth in the tray for attracting the imagoes. Also, for example, a bottle made of PET provided with lateral holes may be used as a simple trap by putting an adequate amount of the poisoned bait (50 to 500 ml) therein.

Since having a very high activity against flies, the compound or salt thereof having an affinity for NACR of the present invention helps quickly and efficiently to control flies that live in or come flying to livestock pens or poultry houses. Also, since having an excellent control effect on flies that show resistance to conventional chemicals including a organo-phosphoric pesticide and a pyrethroid, the compound or salt thereof helps to prevent propagation, caused by flies, of various diseases to livestock, poultry and humans, and reduce discomfort of workers engaged in the livestock and poultry farming and a community. Still, it is possible with the present invention to keep livestock pens or poultry houses in a hygienic condition, which may greatly contribute to the development of the livestock and poultry farming.

The following preparation example, examples and test example further illustrate the present invention in detail but not to be construed to limit the scope of the present invention. In the following preparation example, examples and test example, all the parts and percents are by weight unless otherwise stated.

### Preparation Example 1

### Preparation of 50 % chlothianidine granular wettable powder

| | |
|---|---|
| Clothianidin | 50 parts, |
| Alkenylsulfate | 10 parts and |
| Radiolite#200 (trade name) were added | 100 parts |
| | (total) |

The above materials were thoroughly mixed, added with 25 parts of tap water, and kneaded in a mortar. Then, the resultant kneaded materials were granulated into column-shaped granules by a pellet mill (Kikusui Seisakusho Ltd., RG-5W) using a screen with a diameter of 0.8 mm. The resultant granules were dried at 60°C for 1 hour to obtain clothianidin 50 % granular wettable powder.

### Example 1

### Preparation of liquid composition for application to livestock pen and poultry house

Ten grams of clothianidin 50 % granular wettable powder and 10 g of sugar were mixed. To the mixture was added water and the total volume was adjusted to 100 ml.

### Example 2

### Preparation of liquid composition for poisoned bait

To 100 g of a 1 : 5 : 10 mixture of sugar, vinegar and milk powder (feed for weaning baby pigs) and 10 g of clothianidin 50 % granular wettable powder was added water and the mixture was adjusted to the total volume of 500 ml to obtain a liquid composition.

### Test Example 1

### Insecticidal test by oral administration to Musca domestica

A clothianidin solution in alcohol was diluted with 5 % granulated sugar solution to prepare a 50 ppm liquid composition of clothianidin.

Female *Musca domestica* imagoes (ten flies) of a sensitive strain kept without water for 3~4 hours were anesthetized and lightly fixed to a pressure sensitive adhesive sheet which was cut into strips. After the test insects came out from the anesthetic, 1 µL of the liquid composition (containing 0.05 µg of clothianidin) was released from an injection needle attached to a micro dropper so that the test insects inhaled the composition. After 24 hours, it was confirmed that all flies were dead.

## Claims

1. A method for controlling flies, that live in or come flying to livestock pens or poultry houses, comprising using a compound or salt thereof having an affinity for a nicotinic acetylcholine receptor of insects.

2. The method for controlling flies according to claim 1, wherein the compound or the salt thereof is a compound of the formula I, II or III: 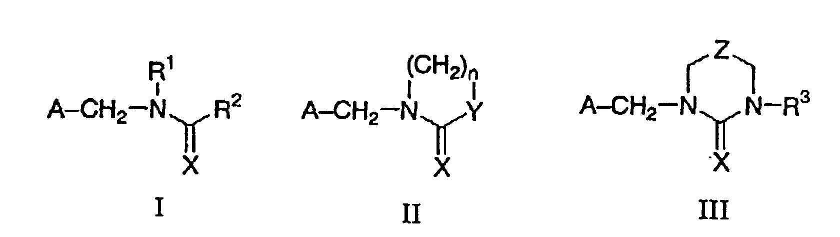 wherein A represents 6-chloro-3-pyridyl, 2-chloro-5-thiazolyl, tetrahydrofuran-3-yl, 5-methyltetrahydrofuran-3-yl, 3-pyridyl, 6-bromo-3-pyridyl, 3-cyanophenyl, 2-methyl-5-thiazolyl, 2-phenyl-5-thiazolyl or 2-bromo-5-thiazolyl; R¹ represents hydrogen atom, methyl, ethyl, propyl, propenyl, propynyl, formyl, acetyl or methoxycarbonyl; R² represents methyl, ethyl, amino, methylamino, N,N-dimethylamino, ethylamino, N,N-diethylamino, N-methyl-N-ethylamino, 1-pyrrolidinyl, N-methylformamide, N-methylacetamide or N-methyl-N-(methoxycarbonyl)amino; R³ represents a hydrogen atom, methyl, ethyl, propyl, propenyl, propynyl, formyl, acetyl or methoxycarbonyl; X represents nitromethylene, nitroimino, cyanoimino or trifluoroacetylimino; Y represents a group represented by N (R⁴) (R⁴ is as defined with respect to R¹) or sulfur atom; Z represents a group represented by N (R⁵) (R⁵ is as defined with respect to R¹) or oxygen atom; and n is an integer of 2 or 3, or a salt thereof.

3. The method for controlling flies according to claim 1, wherein the compound is one or more compounds selected from the group consisting of clothianidin (common name), nitenpyram (common name), imidacloprid (common name), thiacloprid (common name), acetamiprid (common name), thiamethoxam (common name) and dinotefuran (common name).

4. The method for controlling flies according to claim 1, wherein the compound is clothianidin (common name).

5. The method for controlling flies according to claim 1, wherein the compound or salt thereof having an affinity for a nicotinic acetylcholine receptor of insects is sprinkled or sprayed in livestock pens or poultry houses.

6. The method for controlling flies according to claim 1, wherein the compound or salt thereof with an affinity for a nicotinic acetylcholine receptor of insects is applied to the inside of livestock pens or poultry houses.

7. The method for controlling flies according to claim 1, wherein a poisoned bait containing the compound or salt thereof with an affinity for a nicotinic acetylcholine receptor of insects is placed in livestock pens or poultry houses.

8. A composition for controlling flies, that live in or come flying to livestock pens or poultry houses, comprising a compound or salt thereof having an affinity for a nicotinic acetylcholine receptor of insects.

9. The composition for controlling flies according to claim 8, wherein the compound or the salt thereof is a compound of the formula I, II or III: 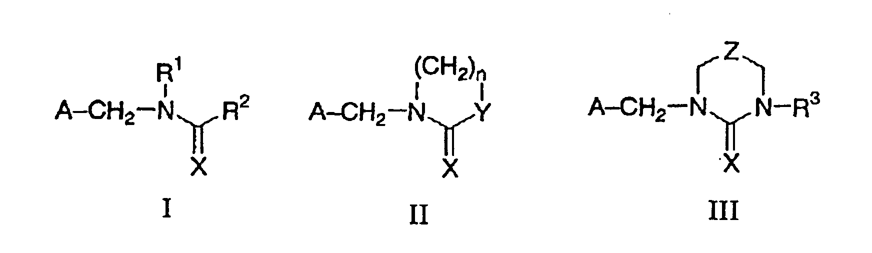 wherein A represents 6-chloro-3-pyridyl, 2-chloro-5-thiazolyl, tetrahydrofuran-3-yl, 5-methyltetrahydrofuran-3-yl, 3-pyridyl, 6-bromo-3-pyridyl, 3-cyanophenyl, 2-methyl-5-thiazolyl, 2-phenyl-5-thiazolyl or 2-bromo-5-thiazolyl; R¹ represents hydrogen atom, methyl, ethyl, propyl, propenyl, propynyl, formyl, acetyl or methoxycarbonyl; R² represents methyl, ethyl, amino, methylamino, N,N-dimethylamino, ethylamino, N,N-diethylamino, N-methyl-N-ethylamino, 1-pyrrolidinyl, N-methylformamide, N-methylacetamide or N-methyl-N-(methoxycarbonyl)amino; R³ represents a hydrogen atom, methyl, ethyl, propyl, propenyl, propynyl, formyl, acetyl or methoxycarbonyl; X represents nitromethylene, nitroimino, cyanoimino or trifluoroacetylimino; Y represents a group represented by N (R⁴) (R⁴ is as defined with respect to R¹) or sulfur atom; Z represents a group represented by N (R⁵) (R⁵ is as defined with respect to R¹) or oxygen atom; and n is an integer of 2 or 3, or a salt thereof.

10. Use of a compound or salt thereof having an affinity for a nicotinic acetylcholine receptor of insects for manufacturing a composition for controlling flies that live in or come flying to livestock pens or poultry houses.

11. Use according to claim 10, wherein the compound or the salt thereof is a compound of the formula I, II or III: 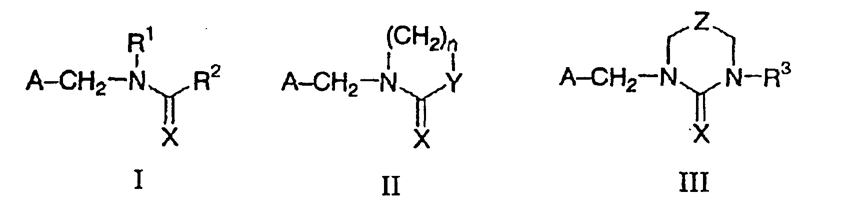 wherein A represents 6-chloro-3-pyridyl, 2-chloro-5-thiazolyl, tetrahydrofuran-3-yl, 5-methyltetrahydrofuran-3-yl, 3-pyridyl, 6-bromo-3-pyridyl, 3-cyanophenyl, 2-methyl-5-thiazolyl, 2-phenyl-5-thiazolyl or 2-bromo-5-thiazolyl; R¹ represents hydrogen atom, methyl, ethyl, propyl, propenyl, propynyl, formyl, acetyl or methoxycarbonyl; R² represents methyl, ethyl, amino, methylamino, N,N-dimethylamino, ethylamino, N,N-diethylamino, N-methyl-N-ethylamino, 1-pyrrolidinyl, N-methylformamide, N-methylacetamide or N-methyl-N-(methoxycarbonyl)amino; R³ represents a hydrogen atom, methyl, ethyl, propyl, propenyl, propynyl, formyl, acetyl or methoxycarbonyl; X represents nitromethylene, nitroimino, cyanoimino or trifluoroacetylimino; Y represents a group represented by N (R⁴) (R⁴ is as defined with respect to R¹) or sulfur atom; Z represents a group represented by N (R⁵) (R⁵ is as defined with respect to R¹) or oxygen atom; and n is an integer of 2 or 3, or a salt thereof.
